# EUROPEAN PATENT SPECIFICATION

(11) **EP 3 713 308 B1**
(45) Date of publication and mention of the grant of the patent: **06.10.2021**
(21) Application number: 17932510.5
(22) Date of filing: 20.11.2017
(51) Int. Cl.: H04W 48/18

(54) **NETWORK SLICE CONFIGURATION METHOD AND DEVICE AND COMPUTER STORAGE MEDIUM**
VERFAHREN UND VORRICHTUNG ZUR KONFIGURATION VON NETZWERKSCHEIBEN UND COMPUTERSPEICHERMEDIUM
PROCÉDÉ ET DISPOSITIF DE CONFIGURATION DE TRANCHE DE RÉSEAU ET SUPPORT DE STOCKAGE INFORMATIQUE

(43) Date of publication of application: 23.09.2020
(73) Proprietor: GUANGDONG OPPO MOBILE TELECOMMUNICATIONS CORP., LTD., Wusha, Chang'an Dongguan, Guangdong 523860 (CN)
(72) Inventor: LIU, Jianhua, Dongguan Guangdong 523860 (CN)
(74) Representative: Penza, Giancarlo
(86) International application number: PCT/CN2017/111896
(87) International publication number: WO 2019/095375

(56) References cited:
- WO-A1-2017/113109
- WO-A1-2017/181779
- CN-A- 106 572 516
- CN-A- 106 572 516
- CN-A- 106 937 363
- CN-A- 107 071 799
- CN-A- 107 295 609
- CN-A- 107 318 113
- NEC: "pCR to TR 33.899: Removal of Editor's Notes of Solution 8.1", 3GPP DRAFT; S3-170863_PCR TO TR 33.899_REMOVAL OF EDITOR'S NOTES OF SOLUTION 8.1, 3RD GENERATION PARTNERSHIP PROJECT (3GPP), MOBILE COMPETENCE CENTRE ; 650, ROUTE DES LUCIOLES ; F-06921 SOPHIA-ANTIPOL , vol. SA WG3, no. Busan; 20170327 - 20170331 27 March 2017 (2017-03-27), XP051248613, Retrieved from the Internet: URL:http://www.3gpp.org/ftp/Meetings_3GPP_ SYNC/SA3/Docs/ [retrieved on 2017-03-27]
- HUAWEI: "Further Discussion on Slice Re-mapping", 3GPP DRAFT; R3-171251 FURTHER DISCUSSIONS ON SLICE RE-MAPPING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Spokane, Washington, USA; 20170403 - 20170407 3 April 2017 (2017-04-03), XP051245961, Retrieved from the Internet: URL:http://www.3gpp.org/ftp/Meetings_3GPP_ SYNC/RAN3/Docs/ [retrieved on 2017-04-03]

## Description

### Technical Field

The present disclosure relates to the field of mobile communication technologies, and in particular, to a network slice configuration method, an apparatus and a computer storage medium.

### Background

The fifth generation mobile communication (5G, 5th Generation) technology is the trend of future development. In the 5G system, network slicing technology is a very important technology. Major network operators and equipment manufacturers believe that network slicing is ideal network architecture for the 5G system.

Network slicing technology allows operators to cut out multiple virtual end-to-end networks on hardware infrastructure, that is, network slicing. Each network slice is logically isolated so as to adapt to different characteristic requirements of various types of services. For each network slice, dedicated resources such as a virtual server, network bandwidth, and quality of service are fully guaranteed. In addition, since the network slices are isolated from each other, the error or failure of one network slice will not affect adversely the communication of other network slices.

Based on the above network slicing technology, how to configure a network slice for a terminal to obtain better network services is a problem to be solved.

The document CN 106572516 A discloses a network slice selection method, so that in a scenario in which one terminal device subscribes to a plurality of network slices, a network device can select a network slice for the terminal device. The method includes: generating, by a terminal device, first information, where the first information includes any one or any combination of the following: information about a first network slice, first service information, and access information of the terminal device; sending, by the terminal device, a first message including the first information to a network device, where the first message is used to request to select a network slice for the terminal device; selecting, by the network device, a network slice for the terminal device based on the first information; and sending, by the network device, a second message to the terminal device, where the second message is used to indicate the network slice selected by the network device for the terminal device.

The document NEC: "pCR to TR 33.899: Removal of Editor's Notes of Solution 8.1" discloses several key issues of #8.1 Security isolation of network slices and #8.2 Security mechanism differentiation for network slices.

The document WO 2017/181779 A1 discloses a method of generating a radio access network (RAN) slice, a radio access network, and a slice manager. The method comprises: a RAN receives from a slice manager a RAN slice generation request; and the RAN generates a RAN slice. The RAN generation request comprises information of a service type. The RAN slice configures a protocol stack corresponding to the service type. The application of the invention is used to prevent deploying different RANs repeatedly in order to satisfy different service types, reducing operation costs. The embodiment can rapidly generate a RAN slice, facilitating rapid deployment of a new service.

The document HUAWEI: "Further Discussion on Slice Re-mapping" discloses the impacts of slice-remapping on RAN and to derive a general procedure for connected mode mobility in support of slice re-mapping.

### Summary

A method according to claim 1, a terminal according to claim 4 and a computer storage medium according to claim 7 are provided. Further improvements and embodiments are provided in the dependent claims.

An implementation of the present disclosure provides a network slice configuration method, including: receiving, by a terminal, network slice information sent by a core network; determining, by the terminal, whether the network slice information sent by the core network matches reference network slice information; if the network slice information sent by the core network does not match the reference network slice information, store the network slice information that does not match the reference network slice information; and when the terminal sends a network slice request message to the core network, indicating in the network slice request message that the network slice information that does not match the reference network slice information needs to be excluded from network slice information that is requested.

In an implementation of the present disclosure, determining, by the terminal, whether the network slice information sent by the core network matches the reference network slice information, includes: determining, by the terminal, whether the network slice information sent by the core network matches network slice information supported by the terminal; wherein correspondingly it is indicated in the network slice request message that network slice information that does not match network slice information supported by the terminal needs to be excluded from network slice information that is requested.

In an implementation of the present disclosure, determining, by the terminal, whether the network slice information sent by the core network matches the reference network slice information, includes: determining, by the terminal, whether the network slice information sent by the core network matches the network slice subscription information of the terminal; wherein correspondingly it is indicated in the network slice request message that network slice information that does not match the network slice subscription information of the terminal needs to be excluded from network slice information that is requested.

An implementation of the present disclosure provides an apparatus for configuring a network slice, including: a receiving unit configured to receive network slice information sent by a core network; a determining unit configured to determine whether the network slice information sent by the core network matches reference network slice information; and a storing unit configured to, if the network slice information sent by the core network does not match the reference network slice information, store the network slice information that does not match the reference network slice information; and a requesting unit configured to, when sending a network slice request message to the core network, indicate in the network slice request message that the network slice information that does not match the reference network slice information needs to be excluded from network slice information that is requested.

In an implementation of the present disclosure, the determining unit is specifically configured to determine whether the network slice information sent by the core network matches network slice information supported by the terminal; wherein correspondingly it is indicated in the network slice request message that network slice information that does not match network slice information supported by the terminal needs to be excluded from network slice information that is requested.

In an implementation of the present disclosure, the determining unit is specifically configured to determine whether the network slice information sent by the core network matches the network slice subscription information of the terminal; wherein correspondingly it is indicated in the network slice request message that network slice information that does not match the network slice subscription information of the terminal needs to be excluded from network slice information that is requested.

An implementation of the present disclosure provides a computer storage medium, storing computer-executable instructions, wherein when the computer-executable instructions are executed by a processor, the above network slice configuration method is implemented.

### Brief Description of Drawings

The accompanying drawings described here are used for providing a deeper understanding of the present disclosure, and constitute a part of the present application. Schematic implementations of the present disclosure and description thereof are used for illustrating the present disclosure and not intended to form an improper limit to the present disclosure. In the accompanying drawings:
FIG. 1 is a first schematic diagram of network slicing;
FIG. 2 is a second schematic diagram of network slicing;
FIG. 3 is a third schematic diagram of network slicing;
FIG. 4 is a fourth schematic diagram of network slicing;
FIG. 5 is a first schematic flowchart of a network slice configuration method according to an implementation not covered by the present invention;
FIG. 6 is a second schematic flowchart of a network slice configuration method according to an implementation not covered by the present invention;
FIG. 7 is a third schematic flowchart of a network slice configuration method according to an implementation of the present invention;
FIG. 8 is a first schematic structural diagram of an apparatus for configuring a network slice according to an implementation not covered by the present invention;
FIG. 9 is a second schematic structural diagram of an apparatus for configuring a network slice according to an implementation not covered by the present invention;
FIG. 10 is a third schematic structural diagram of an apparatus for configuring a network slice according to an implementation of the present invention; and
FIG. 11 is a schematic structural diagram of a terminal according to an implementation not covered by the present invention.

### Detailed Description

To understand features and technical contents of implementations of the present disclosure in more detail, the implementation of the implementations of the present disclosure will be described in detail below with reference to the drawings, which are used for reference only and are not intended to limit the implementations of the present disclosure.

In order to facilitate the understanding of technical schemes of implementations of the present disclosure, the network slicing technology in the 5G system will be described below.

### 1) Reasons for introducing network slicing into 5G

From the previous mobile network to the current 4G network, a mobile network mainly serves mobile phones, so the network generally only makes some optimization for mobile phones. However, in the 5G era, a mobile network needs to serve devices of various types and needs. Many application scenarios involved in 5G include: Mobile Broadband, Massive IoT, and Mission-critical IoT. These scenarios all require different types of networks and have different requirements in terms of mobility, billing, security, policy control, delay, and reliability and the like.

For example, a Massive IoT service connects fixed sensors to measure temperature, humidity, rainfall, etc. Features such as handover and location update which mainly serve mobile phones in the mobile network are not needed. In addition, Mission-critical IoT services such as autonomous driving and remote control of robots require end-to-end delay of several milliseconds, which is very different from Mobile Broadband services.

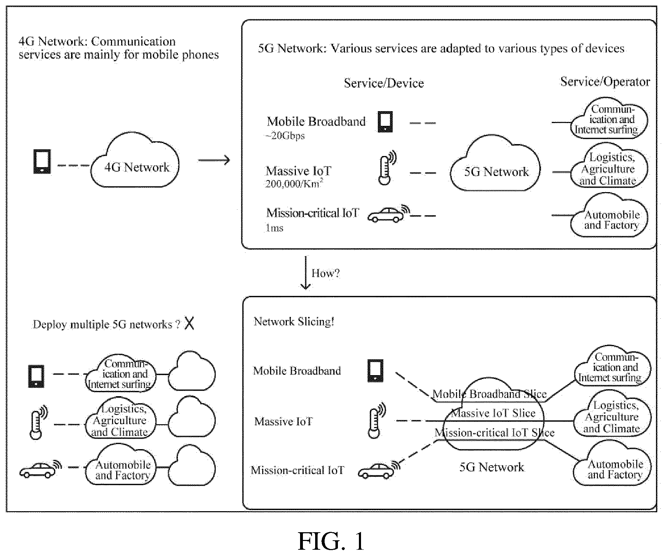

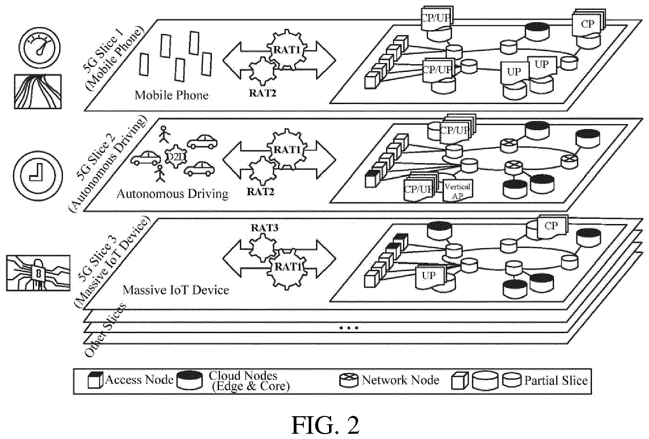

Does this mean that a dedicated network needs to be built for each service, for example, one serving 5G mobile phones, one serving 5G Massive IoT, and one serving 5G Mission-critical IoT? In fact, it is not necessary because multiple logical networks can be cut out on an independent physical network through network slicing technology as shown in FIG. 1 and FIG. 2, and this can greatly save costs.

### 2) Implementation of end-to-end network slicing

The implementation of end-to-end network slicing is mainly the introduction of Network Function Virtualization (NFV) technology in a radio access network (RAN) and a core network of 5G.

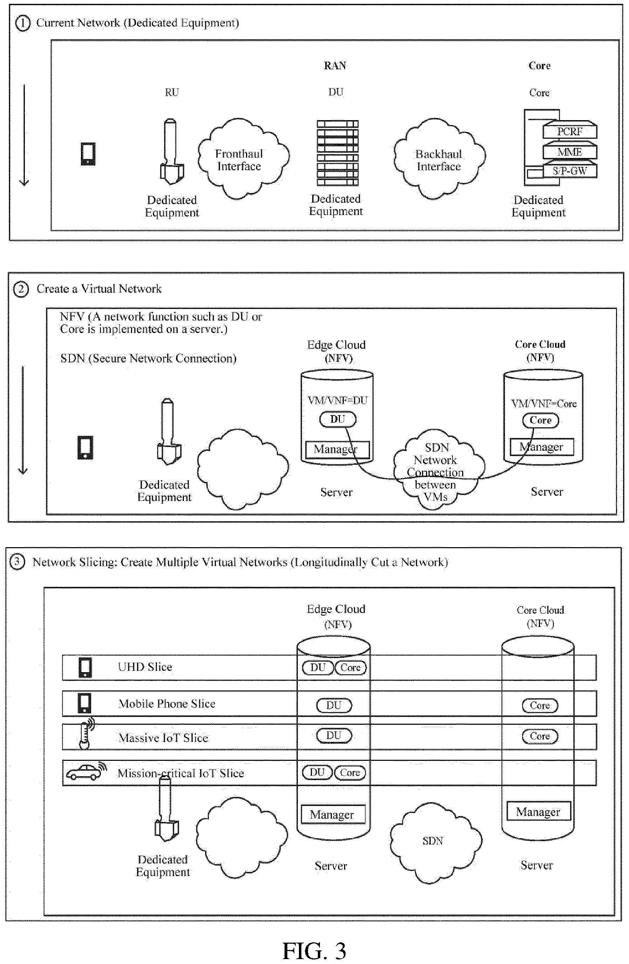

As shown in FIG. 3: (1): In the current network, the main device is the mobile phone. The RAN (Digital Unit (DU) and Radio Frequency Unit (RU)) and core functions are constructed by dedicated network equipment provided by the manufacturer. (2): In order to implement network slicing, it is needed to enter NFV technology. The main idea of NFV is that all the network function software (i.e., the MME, S/P-GW and PCRF in the packet core and the DU in the RAN) is deployed on a virtual machine (VM) on a commercial server instead of being deployed separately on its dedicated network equipment. In this way, the RAN is regarded as an edge cloud, and the core functions are regarded as a core cloud. The connection between the VMs located in the edge cloud and the core cloud is configured by using a Software Defined Network (SDN). (3): Then network slices are created for various services (i.e., a phone slice, a Massive IoT slice, a Mission-critical IoT slice, and so on).

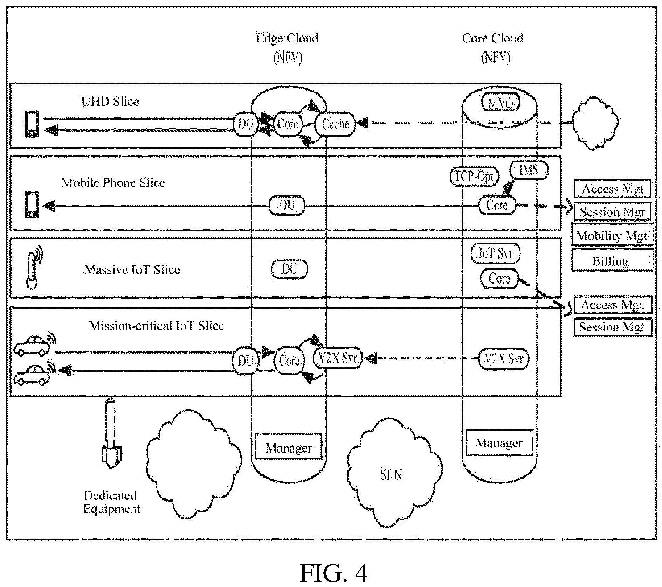

FIG. 4 shows how each service-specific application is virtualized and installed in each slice. For example, a slice may be configured as follows:
(1) Ultra High Definition (UHD) Slice: A DU, a 5G core (user plane, UP) and a cache are virtualized in an edge cloud, and a 5G core (control plane, CP) and an MVO server are virtualized in a core cloud.
(2) Phone Slice: A 5G core (UP and CP) with full mobile functions and an IMS server are virtualized in a core cloud.
(3) Massive IoT Slice (for example, a sensor network): A simple and lightweight 5G core is virtualized in a core cloud. The 5G core has no mobility management function.
(4) Mission-critical IoT Slice: A 5G core (UP) and related servers (such as V2X servers) are virtualized in an edge cloud to minimize transmission latency.

In the 5G, dedicated slices need to be created for services with different requirements, and virtual network functions are placed in different locations (i.e., in an edge cloud or a core cloud) in each slice according to different service characteristics. In addition, some network functions such as billing, policy control, etc. may be necessary in some slices, but not necessary in other network slices. Operators may customize a network slice in the way they want.

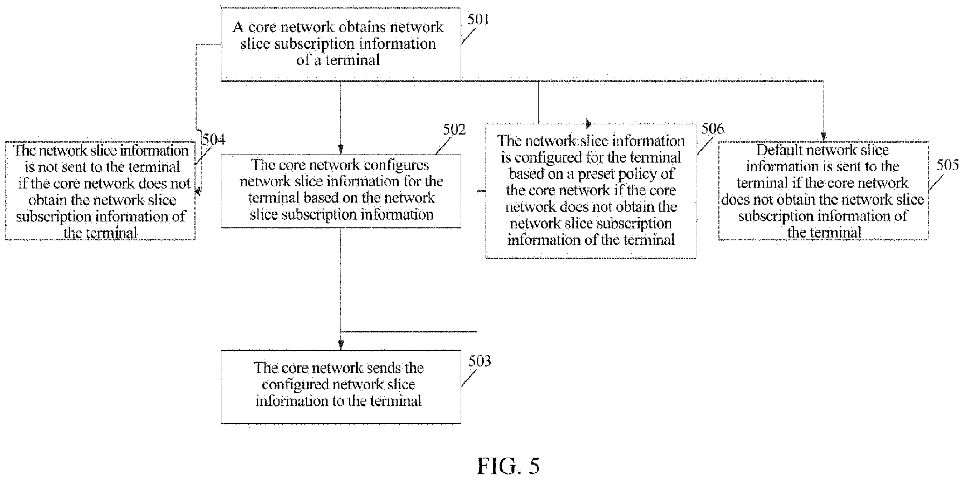

FIG. 5 is a first schematic flowchart of a network slice configuration method according to an implementation of the present disclosure. As shown in FIG. 5, the network slice configuration method includes the following acts.

Act 501: A core network obtains network slice subscription information of a terminal.

In an implementation, the network slice subscription information refers to identification information of a network slice to which a terminal is subscribed. Different network slices may provide different services to the terminal.

In the implementation of the present disclosure, network slice subscription information is stored in a database, and the core network may retrieve network slice subscription information of a terminal from the database.

Act 502: The core network configures network slice information for the terminal based on the network slice subscription information.

In the implementation of the present disclosure, the core network configures the terminal with the network slice information that matches the network slice subscription information.

In an implementation, there may be one piece of network slice information that matches the network slice subscription information. In another implementation, there may be multiple pieces of network slice information that match the network slice subscription information.

Act 503: The core network sends the configured network slice information to the terminal.

The method according to the implementation of the present disclosure further includes the following acts.

Act 504: The network slice information is not sent to the terminal if the core network does not obtain the network slice subscription information of the terminal.

Act 505: Default network slice information is sent to the terminal if the core network does not obtain the network slice subscription information of the terminal.

Act 506: The network slice information is configured for the terminal based on a preset policy of the core network if the core network does not obtain the network slice subscription information of the terminal, and act 503 is executed.

Those skilled in the art should understand that the execution order of acts 504, 505, 506, and 502 is not limited.

In an implementation, if the core network receives a response message sent by the terminal, the core network determines, based on the response message, network slice information that is not supported by the terminal, wherein the response message carries the network slice information that is not supported by the terminal. The core network stores the network slice information that is not supported by the terminal. When the core network configures the network slice information for the terminal again, the network slice information that is not supported by the terminal is excluded so as to configure the network slice information for the terminal.

In another implementation, if the core network receives a response message sent by the terminal, the core network determines, based on the response message, network slice information that does not match the network slice subscription information of the terminal, wherein the response message carries the network slice information that does not match the network slice subscription information of the terminal. The core network stores the network slice information that does not match the network slice subscription information of the terminal. When the core network configures the network slice information for the terminal again, the network slice information that does not match the network slice subscription information of the terminal is excluded so as to configure the network slice information for the terminal.

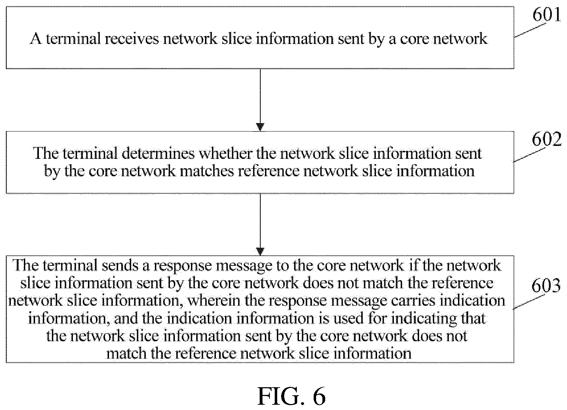

FIG. 6 is a second schematic flowchart of a network slice configuration method according to an implementation of the present disclosure. As shown in FIG. 6, the network slice configuration method includes the following acts:
Act 601: A terminal receives network slice information sent by a core network.
Act 602: The terminal determines whether the network slice information sent by the core network matches reference network slice information.
Act 603: The terminal sends a response message to the core network if the network slice information sent by the core network does not match the reference network slice information, wherein the response message carries indication information, and the indication information is used for indicating that the network slice information sent by the core network does not match the reference network slice information.

In the implementation of the present disclosure, the response message further carries network slice information that is not supported by the terminal or network slice information that does not match network slice subscription information of the terminal.

In an implementation, determining, by the terminal, whether the network slice information sent by the core network matches the reference network slice information, includes: determining, by the terminal, whether the network slice information sent by the core network matches network slice information supported by the terminal; wherein correspondingly the indication information is used for indicating that the network slice information sent by the core network does not match the network slice information supported by the terminal.

In another implementation, determining, by the terminal, whether the network slice information sent by the core network matches the reference network slice information, includes: determining, by the terminal, whether the network slice information sent by the core network matches the network slice subscription information of the terminal; wherein correspondingly the indication information is used for indicating that the network slice information sent by the core network does not match the network slice subscription information of the terminal.

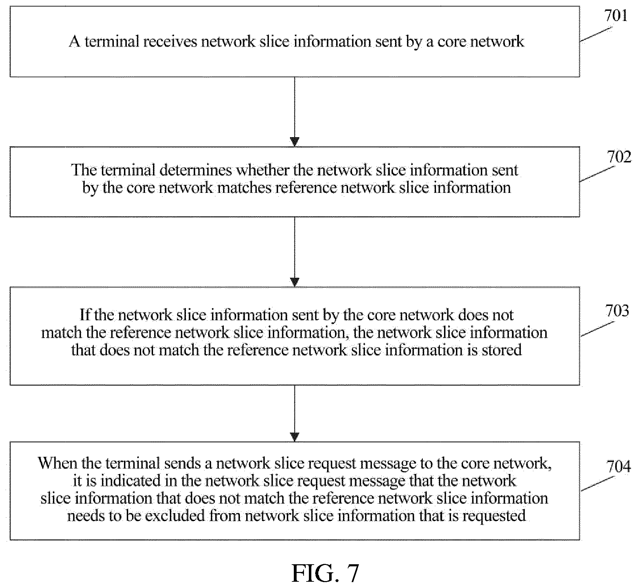

FIG. 7 is a third schematic flowchart of a network slice configuration method according to an implementation of the present disclosure. As shown in FIG. 7, the network slice configuration method includes the following acts:
Act 701: A terminal receives network slice information sent by a core network.
Act 702: The terminal determines whether the network slice information sent by the core network matches reference network slice information.
Act 703: If the network slice information sent by the core network does not match the reference network slice information, the network slice information that does not match the reference network slice information is stored.
Act 704: When the terminal sends a network slice request message to the core network, it is indicated in the network slice request message that the network slice information that does not match the reference network slice information needs to be excluded from network slice information that is requested.

In an implementation, determining, by the terminal, whether the network slice information sent by the core network matches the reference network slice information, includes: determining, by the terminal, whether the network slice information sent by the core network matches network slice information supported by the terminal; wherein correspondingly it is indicated in the network slice request message that network slice information that does not match network slice information supported by the terminal needs to be excluded from network slice information that is requested.

In another implementation, determining, by the terminal, whether the network slice information sent by the core network matches the reference network slice information, includes: determining, by the terminal, whether the network slice information sent by the core network matches the network slice subscription information of the terminal; wherein correspondingly it is indicated in the network slice request message that network slice information that does not match the network slice subscription information of the terminal needs to be excluded from network slice information that is requested.

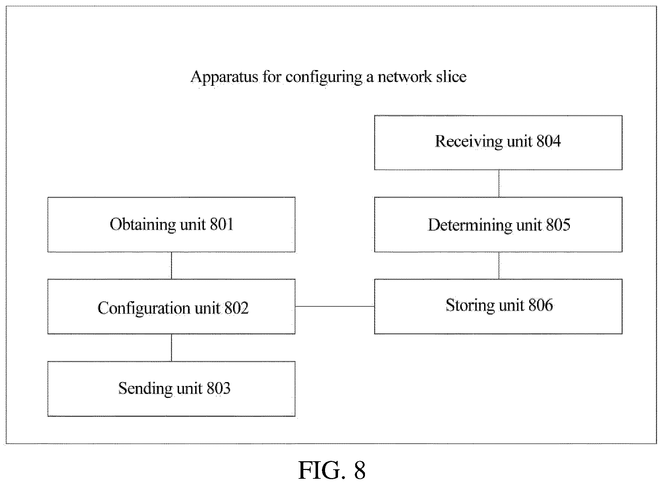

FIG. 8 is a first schematic structural diagram of an apparatus for configuring a network slice according to an implementation of the present disclosure. As shown in FIG. 8, the apparatus includes: an obtaining unit 801, a configuration unit 802, and a sending unit 803.

The obtaining unit 801 is configured to obtain network slice subscription information of a terminal.

The configuration unit 802 is configured to configure network slice information for the terminal based on the network slice subscription information.

The sending unit 803 is configured to send the configured network slice information to the terminal.

In an implementation, the sending unit 803 is further configured not to send the network slice information to the terminal if the core network does not obtain the network slice subscription information of the terminal.

In an implementation, the sending unit 803 is further configured to send default network slice information to the terminal if the core network does not obtain the network slice subscription information of the terminal.

In an implementation, the configuration unit 802 is further configured to configure the network slice information for the terminal based on a preset policy of the core network if the core network does not obtain the network slice subscription information of the terminal.

In an implementation, the apparatus further includes: a receiving unit 804, a determining unit 805 and a storing unit 806.

The receiving unit 804 is configured to receive a response message sent by the terminal wherein the response message carries the network slice information that is not supported by the terminal.

The determining unit 805 is configured to determine network slice information that is not supported by the terminal based on the response message.

The storing unit 806 is configured to store the network slice information that is not supported by the terminal.

The configuration unit 802 is further configured to, when configuring the network slice information for the terminal again, exclude the network slice information that is not supported by the terminal so as to configure the network slice information for the terminal.

In an implementation, the apparatus further includes: a receiving unit 804, a determining unit 805, and a storing unit 806.

The receiving unit 804 is configured to receive a response message sent by the terminal, wherein the response message carries the network slice information that does not match the network slice subscription information of the terminal.

The determining unit 805 is configured to determine, based on the response message, network slice information that does not match the network slice subscription information of the terminal.

The storing unit 806 is configured to store the network slice information that does not match the network slice subscription information of the terminal.

The configuration unit 802 is further configured to, when configuring the network slice information for the terminal again, exclude the network slice information that does not match the network slice subscription information of the terminal so as to configure the network slice information for the terminal.

Those skilled in the art should understand that the implementation function of each unit in the apparatus for configuring a network slice shown in FIG. 8 can be understood by referring to the related description of the foregoing network slice configuration method. The functions of the units in the apparatus for configuring a network slice shown in FIG. 8 may be implemented by a program running on a processor, or may be implemented by a specific logic circuit.

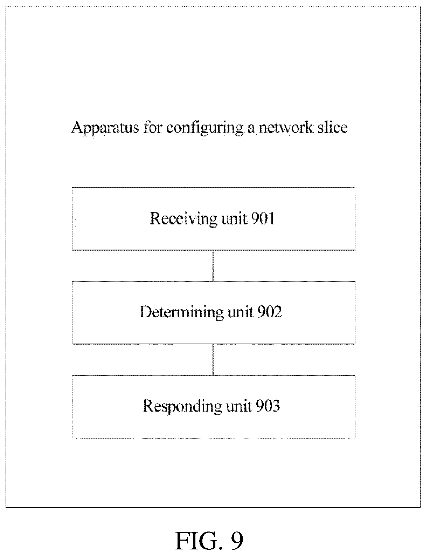

FIG. 9 is a second schematic structural diagram of an apparatus for configuring a network slice according to an implementation of the present disclosure. As shown in FIG. 9, the apparatus includes: a receiving unit 901, a determining unit 902, and a responding unit 903.

The receiving unit 901 is configured to receive network slice information sent by a core network.

The determining unit 902 is configured to determine whether the network slice information sent by the core network matches reference network slice information.

The responding unit 903 is configured to send a response message to the core network if the network slice information sent by the core network does not match the reference network slice information, wherein the response message carries indication information, and the indication information is used for indicating that the network slice information sent by the core network does not match the reference network slice information.

In an implementation of the present disclosure, the response message further carries network slice information that is not supported by the terminal or network slice information that does not match network slice subscription information of the terminal.

In an implementation, the determining unit 902 is specifically configured to determine whether the network slice information sent by the core network matches network slice information supported by the terminal.

Correspondingly, the indication information is used for indicating that the network slice information sent by the core network does not match the network slice information supported by the terminal.

In an implementation, the determining unit 902 is specifically configured to determine whether the network slice information sent by the core network matches the network slice subscription information of the terminal.

Correspondingly, the indication information is used for indicating that the network slice information sent by the core network does not match the network slice subscription information of the terminal.

Those skilled in the art should understand that the implementation function of each unit in the apparatus for configuring a network slice shown in FIG. 9 can be understood by referring to the related description of the foregoing network slice configuration method. The functions of the units in the apparatus for configuring a network slice shown in FIG. 9 may be implemented by a program running on a processor, or may be implemented by a specific logic circuit.

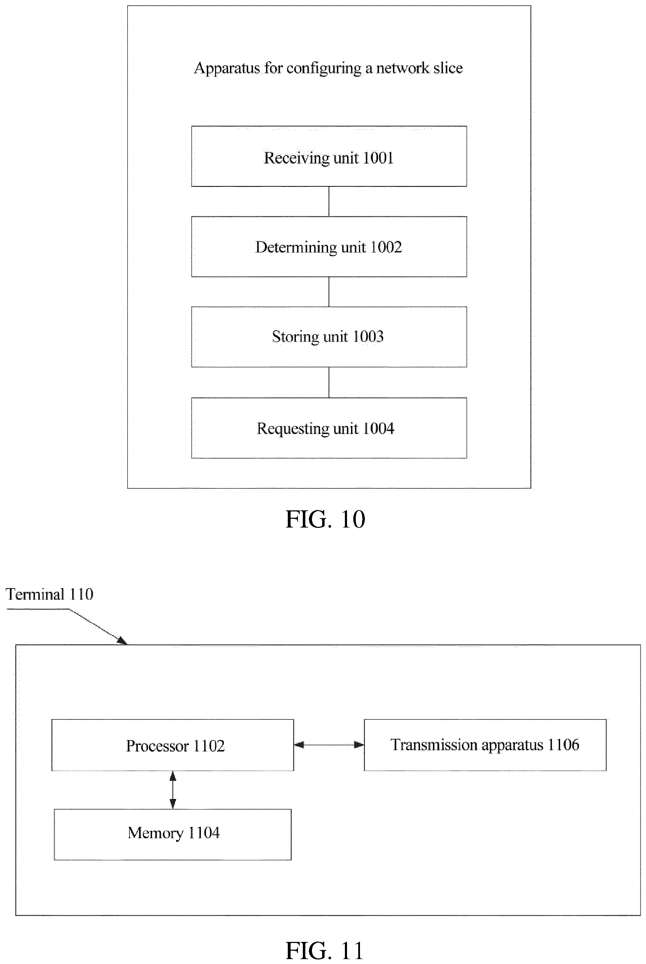

FIG. 10 is a third schematic structural diagram of an apparatus for configuring a network slice according to an implementation of the present disclosure. As shown in FIG. 10, the apparatus includes: a receiving unit 1001, a determining unit 1002, a storing unit 1003, and a requesting unit 1004.

The receiving unit 1001 is configured to receive network slice information sent by a core network.

The determining unit 1002 is configured to determine whether the network slice information sent by the core network matches reference network slice information.

The storing unit 1003 is configured to, if the network slice information sent by the core network does not match the reference network slice information, store the network slice information that does not match the reference network slice information.

The requesting unit 1004 is configured to, when sending a network slice request message to the core network, indicate in the network slice request message that the network slice information that does not match the reference network slice information needs to be excluded from network slice information that is requested.

In an implementation, the determining unit 1002 is specifically configured to determine whether the network slice information sent by the core network matches network slice information supported by the terminal.

Correspondingly, it is indicated in the network slice request message that network slice information that does not match network slice information supported by the terminal needs to be excluded from network slice information that is requested.

In an implementation, the determining unit 1002 is specifically configured to determine whether the network slice information sent by the core network matches the network slice subscription information of the terminal.

Correspondingly, it is indicated in the network slice request message that network slice information that does not match the network slice subscription information of the terminal needs to be excluded from network slice information that is requested.

The above apparatus for configuring a network slice in the implementations of the present disclosure may also be stored in a computer readable storage medium when it is implemented in the form of a software function module and sold or used as an independent product. Based on this understanding, the technical solutions in the implementations of the present disclosure, in essence, or the part contributing to the prior art, may be embodied in the form of a software product stored in a storage medium, including several instructions for causing a computer device (which may be a personal computer, a server, or a network device, etc.) to perform all or part of the methods described in various implementations of the present disclosure. The aforementioned storage medium includes a U disk, a mobile hard disk, a read-only memory (ROM), a magnetic disk or an optical disk, and another media capable of storing program codes. Thus, the implementations of the present disclosure are not limited to any specific combination of hardware and software.

Correspondingly, an implementation of the present disclosure also provides a computer storage medium storing computer-executable instructions, and when the computer-executable instructions are executed by a processor, the network slice configuration method of the implementation of the present disclosure is realized.

FIG. 11 is a schematic structural diagram of a terminal according to an implementation of the present disclosure. As shown in FIG. 11, the terminal 110 may include one or more (only one is shown in the figure) processors 1102 (the processors 1102 may include, but are not limited to, processing devices such as a Micro Controller Unit (MCU) and a Field Programmable Gate Array (FPGA)), a memory 1104 for storing data, and a transmission apparatus 1106 configured for communication functions. One of ordinary skill in the art may understand that the structure shown in FIG. 11 is only schematic and does not limit the structure of the above electronic apparatus. For example, the terminal 110 may also include more or fewer components than those shown in FIG. 11, or have different configuration than that shown in FIG. 11.

The memory 1104 may be configured to store software programs and modules of application software, such as program instructions/modules corresponding to the network slice configuration method in the implementation of the present disclosure. The processor 1102 runs software programs and modules stored in the memory 1104 to execute various functional applications and data processing, that is, to implement the above method. The memory 1104 may include a high speed random access memory, and may further include a non-transitory memory, such as at least one magnetic disk storage device, a flash memory, or other volatile solid-state storage device. In some examples, the memory 1104 optionally includes memories remotely disposed with respect to the processor 1102, and the remote memories may be connected, via a network, to the terminal 110. Examples of the foregoing network include but are not limited to: the Internet, an intranet, a local area network, a mobile communications network, and a combination thereof.

The transmission apparatus 1106 is configured to receive or send data via a network. The specific example of the network described above may include a wireless network provided by a communication provider of the terminal 110. In one example, the transmission apparatus 1106 includes a network interface controller (NIC), which may be connected to other network devices through a base station so as to communicate with the Internet. In one example, the transmission apparatus 1106 may be a radio frequency (RF) module configured to communicate with the Internet by wireless means.

The technical schemes described in the implementations of the present disclosure can be combined arbitrarily without conflict.

In several implementations provided by the present disclosure, it should be understood that the disclosed smart devices and methods and the like may be implemented in other ways. The device implementations described above are only illustrative, for example, the division of the units is only a logical function division, and there may be other division manners in actual implementation. For example, multiple units or components may be combined or integrated into another system, or some features may be ignored or not executed. In addition, the mutual coupling or direct coupling or communication connection between various components shown or discussed may be indirect coupling or communication connection through some interface, apparatus or unit, and may be electrical, mechanical or in other forms.

The unit described as a separate component may or may not be physically separated, and the component shown as a unit may or may not be a physical unit, i.e., it may be located in one place or may be distributed over multiple network units. Some or all of the units may be selected according to practical needs to achieve the purpose of the implementations.

In addition, various functional units in various implementations of the present disclosure may be integrated in a second processing unit, or various units may be physically present separately, or two or more units may be integrated in one unit. The above-mentioned integrated units may be implemented in a form of hardware or in a form of hardware plus software functional units.

## Claims

1. A method for configuring a network slice, wherein the method comprises:
receiving (701), by a terminal, network slice information sent by a core network;
determining (702), by the terminal, whether the network slice information sent by the core network matches reference network slice information;
**characterized in that** the method further comprises: if the terminal determines that the network slice information sent by the core network does not match the reference network slice information, storing (703), by the terminal, the network slice information that does not match the reference network slice information; and
in a case that the terminal sends a network slice request message to the core network, indicating (704) in the network slice request message that the network slice information that does not match the reference network slice information needs to be excluded from network slice information that is requested.

2. The method of claim 1, wherein determining (702), by the terminal, whether the network slice information sent by the core network matches the reference network slice information, comprises:
determining, by the terminal, whether the network slice information sent by the core network matches network slice information supported by the terminal; wherein
correspondingly it is indicated in the network slice request message that the network slice information that does not match the network slice information supported by the terminal needs to be excluded from the network slice information that is requested.

3. The method of claim 1, wherein determining (702), by the terminal, whether the network slice information sent by the core network matches the reference network slice information, comprises:
determining, by the terminal, whether the network slice information sent by the core network matches network slice subscription information of the terminal; wherein
correspondingly it is indicated in the network slice request message that the network slice information that does not match the network slice subscription information of the terminal needs to be excluded from the network slice information that is requested.

4. A terminal for configuring a network slice, wherein the terminal comprises:
a receiving unit (1001) configured to receive network slice information sent by a core network;
a determining unit (1002) configured to determine whether the network slice information sent by the core network matches reference network slice information;
**characterized in that** the terminal further comprises a storing unit (1003) configured to, if the determining unit determines that the network slice information sent by the core network does not match the reference network slice information, store the network slice information that does not match the reference network slice information; and
a requesting unit (1004) configured to, in a case of sending a network slice request message to the core network, indicate in the network slice request message that the network slice information that does not match the reference network slice information needs to be excluded from network slice information that is requested.

5. The terminal of claim 4, wherein the determining unit is specifically configured to determine whether the network slice information sent by the core network matches network slice information supported by the terminal; wherein
correspondingly it is indicated in the network slice request message that network slice information that does not match network slice information supported by the terminal needs to be excluded from network slice information that is requested.

6. The terminal of claim 4, wherein the determining unit is specifically configured to determine whether the network slice information sent by the core network matches the network slice subscription information of the terminal; wherein
correspondingly it is indicated in the network slice request message that network slice information that does not match the network slice subscription information of the terminal needs to be excluded from network slice information that is requested.

7. A computer storage medium, storing computer-executable instructions, wherein when the computer-executable instructions are executed by a processor of a terminal method acts of any one of claims 1-3 are implemented.

## Patentansprüche

1. Verfahren zum Auslegen einer Netzwerkscheibe, wobei das Verfahren Folgendes umfasst:
Empfangen (701) von Netzwerkscheibeninformationen, die von einem Kernnetzwerk gesendet werden, durch ein Endgerät;
Bestimmen (702) durch das Endgerät, ob die Netzwerkscheibeninformationen, die vom Kernnetzwerk gesendet werden, mit Netzwerkscheibenreferenzinformationen übereinstimmen;
**dadurch gekennzeichnet, dass** das Verfahren ferner Folgendes umfasst: wenn das Endgerät bestimmt, dass die Netzwerkscheibeninformationen, die vom Kernnetzwerk gesendet werden, nicht mit den Netzwerkscheibenreferenzinformationen übereinstimmen, Speichern (703) der Netzwerkscheibeninformationen, die nicht mit den Netzwerkscheibenreferenzinformationen übereinstimmen, durch das Endgerät und
in einem Fall, in dem das Endgerät eine Netzwerkscheibenanforderungsnachricht an das Kernnetzwerk sendet, Anzeigen (704) in der Netzwerkscheibenanforderungsnachricht, dass die Netzwerkscheibeninformationen, die nicht mit den Netzwerkscheibenreferenzinformationen übereinstimmen, aus den Netzwerkscheibeninformationen, die angefordert werden, ausgeschlossen werden müssen.

2. Verfahren nach Anspruch 1, wobei das Bestimmen (702) durch das Endgerät, ob die Netzwerkscheibeninformationen, die vom Kernnetzwerk gesendet werden, mit den Netzwerkscheibenreferenzinformationen übereinstimmen, Folgendes umfasst:
Bestimmen durch das Endgerät, ob die Netzwerkscheibeninformationen, die vom Kernnetzwerk gesendet werden, mit Netzwerkscheibeninformationen, die vom Endgerät unterstützt werden, übereinstimmen; wobei in der Netzwerkscheibenanforderungsnachricht entsprechend angezeigt ist, dass die Netzwerkscheibeninformationen, die mit den Netzwerkscheibeninformationen, die vom Endgerät unterstützt werden, nicht übereinstimmen, aus den Netzwerkscheibeninformationen, die angefordert werden, ausgeschlossen werden müssen.

3. Verfahren nach Anspruch 1, wobei das Bestimmen (702) durch das Endgerät, ob die Netzwerkscheibeninformationen, die vom Kernnetzwerk gesendet werden, mit den Netzwerkscheibenreferenzinformationen übereinstimmen, Folgendes umfasst:
Bestimmen durch das Endgerät, ob die Netzwerkscheibeninformationen, die vom Kernnetzwerk gesendet werden, mit Netzwerkscheibensubskriptionsinformationen des Endgeräts übereinstimmen; wobei
in der Netzwerkscheibenanforderungsnachricht entsprechend angezeigt ist, dass die Netzwerkscheibeninformationen, die mit den Netzwerkscheibensubskriptionsinformationen des Endgeräts nicht übereinstimmen, aus den Netzwerkscheibeninformationen, die angefordert werden, ausgeschlossen werden müssen.

4. Endgerät zum Auslegen einer Netzwerkscheibe, wobei das Endgerät Folgendes umfasst:
eine Empfangseinheit (1001), die dazu ausgelegt ist, Netzwerkscheibeninformationen, die von einem Kernnetzwerk gesendet werden, zu empfangen;
eine Bestimmungseinheit (1002), die dazu ausgelegt ist, zu bestimmen, ob die Netzwerkscheibeninformationen, die vom Kernnetzwerk gesendet werden, mit Netzwerkscheibenreferenzinformationen übereinstimmen;
**dadurch gekennzeichnet, dass** das Endgerät ferner eine Speichereinheit (1003) umfasst, die dazu ausgelegt ist, wenn die Bestimmungseinheit bestimmt, dass die Netzwerkscheibeninformationen, die vom Kernnetzwerk gesendet werden, nicht mit den Netzwerkscheibenreferenzinformationen übereinstimmen, die Netzwerkscheibeninformationen, die nicht mit den Netzwerkscheibenreferenzinformationen übereinstimmen, zu speichern; und
eine Anforderungseinheit (1004), die dazu ausgelegt ist, in einem Fall, in dem eine Netzwerkscheibenanforderungsnachricht an das Kernnetzwerk gesendet wird, in der Netzwerkscheibenanforderungsnachricht anzuzeigen, dass die Netzwerkscheibeninformationen, die nicht mit den Netzwerkscheibenreferenzinformationen übereinstimmen, aus den Netzwerkscheibeninformationen, die angefordert werden, ausgeschlossen werden müssen.

5. Endgerät nach Anspruch 4, wobei die Bestimmungseinheit speziell zu Folgendem ausgelegt ist:
Bestimmen, ob die Netzwerkscheibeninformationen, die vom Kernnetzwerk gesendet werden, mit Netzwerkscheibeninformationen übereinstimmen, die vom Endgerät unterstützt werden; wobei
in der Netzwerkscheibenanforderungsnachricht entsprechend angezeigt ist, dass Netzwerkscheibeninformationen, die mit Netzwerkscheibeninformationen, die vom Endgerät unterstützt werden, nicht übereinstimmen, aus Netzwerkscheibeninformationen, die angefordert werden, ausgeschlossen werden müssen.

6. Endgerät nach Anspruch 4, wobei die Bestimmungseinheit speziell zu Folgendem ausgelegt ist:
Bestimmen, ob die Netzwerkscheibeninformationen, die vom Kernnetzwerk gesendet werden, mit den Netzwerkscheibensubskriptionsinformationen des Endgeräts übereinstimmen; wobei
in der Netzwerkscheibenanforderungsnachricht entsprechend angezeigt ist, dass Netzwerkscheibeninformationen, die mit den Netzwerkscheibensubskriptionsinformationen des Endgeräts nicht übereinstimmen, aus Netzwerkscheibeninformationen, die angefordert werden, ausgeschlossen werden müssen.

7. Computerspeichermedium, auf dem computerausführbare Anweisungen gespeichert sind, wobei, wenn die computerausführbaren Anweisungen von einem Prozessor eines Endgeräts ausgeführt werden, Verfahrensmaßnahmen nach einem der Ansprüche 1-3 implementiert werden.

## Revendications

1. Procédé de configuration d'une tranche de réseau, le procédé comprenant les étapes consistant à :
recevoir (701), par un terminal, une information de tranche de réseau envoyée par un réseau central ;
déterminer (702), par le terminal, si l'information de tranche de réseau envoyée par le réseau central concorde avec une information de tranche de réseau de référence ;
le procédé étant **caractérisé en ce qu'**il comprend en outre les étapes consistant à :
si le terminal détermine que l'information de tranche de réseau envoyée par le réseau central ne concorde pas avec l'information de tranche de réseau de référence, stocker (703), par le terminal, l'information de tranche de réseau qui ne concorde pas avec l'information de tranche de réseau de référence ; et
en cas d'envoi, par le terminal, d'un message de demande de tranche de réseau au réseau central, indiquer (704) dans le message de demande de tranche de réseau que l'information de tranche de réseau qui ne concorde pas avec l'information de tranche de réseau de référence doit être exclue de l'information de tranche de réseau qui est demandée.

2. Procédé selon la revendication 1, dans lequel le fait de déterminer (702), par le terminal, si l'information de tranche de réseau envoyée par le réseau central concorde avec l'information de tranche de réseau de référence comprend l'étape consistant à :
déterminer, par le terminal, si l'information de tranche de réseau envoyée par le réseau central concorde avec une information de tranche de réseau prise en charge par le terminal ;
et dans lequel, parallèlement, il est indiqué dans le message de demande de tranche de réseau que l'information de tranche de réseau qui ne concorde pas avec l'information de tranche de réseau prise en charge par le terminal doit être exclue de l'information de tranche de réseau qui est demandée.

3. Procédé selon la revendication 1, dans lequel le fait de déterminer (702), par le terminal, si l'information de tranche de réseau envoyée par le réseau central concorde avec l'information de tranche de réseau de référence comprend l'étape consistant à :
déterminer, par le terminal, si l'information de tranche de réseau envoyée par le réseau central concorde avec une information d'abonnement à une tranche de réseau du terminal ;
et dans lequel, parallèlement, il est indiqué dans le message de demande de tranche de réseau que l'information de tranche de réseau qui ne concorde pas avec l'information d'abonnement à une tranche de réseau du terminal doit être exclue de l'information de tranche de réseau qui est demandée.

4. Terminal de configuration d'une tranche de réseau, le terminal comprenant :
une unité de réception (1001), configurée pour recevoir une information de tranche de réseau envoyée par un réseau central ;
une unité de détermination (1002), configurée pour déterminer si l'information de tranche de réseau envoyée par le réseau central concorde avec une information de tranche de réseau de référence ;
le terminal étant **caractérisé en ce qu'**il comprend en outre :
une unité de stockage (1003), configurée pour, si l'unité de détermination détermine que l'information de tranche de réseau envoyée par le réseau central ne concorde pas avec l'information de tranche de réseau de référence, stocker l'information de tranche de réseau qui ne concorde pas avec l'information de tranche de réseau de référence ; et
une unité de demande (1004), configurée pour, en cas d'envoi d'un message de demande de tranche de réseau au réseau central, indiquer dans le message de demande de tranche de réseau que l'information de tranche de réseau qui ne concorde pas avec l'information de tranche de réseau de référence doit être exclue de l'information de tranche de réseau qui est demandée.

5. Terminal selon la revendication 4, dans lequel l'unité de détermination est spécifiquement configurée pour :
déterminer si l'information de tranche de réseau envoyée par le réseau central concorde avec une information de tranche de réseau prise en charge par le terminal ;
et dans lequel, parallèlement, il est indiqué dans le message de demande de tranche de réseau qu'une information de tranche de réseau qui ne concorde pas avec une information de tranche de réseau prise en charge par le terminal doit être exclue d'une information de tranche de réseau qui est demandée.

6. Terminal selon la revendication 4, dans lequel l'unité de détermination est spécifiquement configurée pour :
déterminer si l'information de tranche de réseau envoyée par le réseau central concorde avec l'information d'abonnement à une tranche de réseau du terminal ;
et dans lequel, parallèlement, il est indiqué dans le message de demande de tranche de réseau qu'une information de tranche de réseau qui ne concorde pas avec l'information d'abonnement à une tranche de réseau du terminal doit être exclue d'une information de tranche de réseau qui est demandée.

7. Support de stockage informatique stockant des instructions exécutables par ordinateur, les actions de procédé selon l'une quelconque des revendications 1 à 3 étant mises en œuvre quand les instructions exécutables par ordinateur sont exécutées par un processeur d'un terminal.
